(19)

Europäisches Patentamt

European Patent Office

Office européen des brevets

(11) **EP 4 685 869 A1**

(12) **EUROPEAN PATENT APPLICATION**
published in accordance with Art. 153(4) EPC

(43) Date of publication:
**28.01.2026 Bulletin 2026/05**

(21) Application number: **24811270.8**

(22) Date of filing: **19.04.2024**

(51) International Patent Classification (IPC):
*H01M 4/36* (2006.01)  *H01M 4/505* (2010.01)
*H01M 4/525* (2010.01)  *H01M 4/131* (2010.01)
*H01M 4/1391* (2010.01)  *H01M 4/02* (2006.01)

(52) Cooperative Patent Classification (CPC):
Y02E 60/10

(86) International application number:
**PCT/KR2024/005282**

(87) International publication number:
**WO 2024/242331 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **19.05.2023  KR 20230065296
18.04.2024  KR 20240052072**

(71) Applicant: **LG Energy Solution, Ltd.
Seoul 07335 (KR)**

(72) Inventors:
• **KIM, Juryoun
  Daejeon 34122 (KR)**
• **KIM, Je Young
  Daejeon 34122 (KR)**
• **KIM, Yojin
  Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE MATERIAL, AND POSITIVE ELECTRODE SLURRY, POSITIVE ELECTRODE, AND LITHIUM SECONDARY BATTERY COMPRISING SAME**

(57)    The present disclosure relates to a positive electrode material for a lithium secondary battery comprising: a first positive electrode active material containing lithium-rich manganese-based oxide; and a second positive electrode active material having one or more particles in the form of a single particle consisting of one nodule or a pseudo-single particle that is a composite of 30 or fewer nodules, and containing lithium transition metal oxide, wherein the first positive electrode active material has a D50 of 8 μm or more, and has a larger value than the D50 of the second positive electrode active material, and to a positive electrode slurry, positive electrode and lithium secondary battery comprising the positive electrode material.

【FIG. 1】

Example 4

**Description**

**TECHNICAL FIELD**

Cross Citation with Related Application(s)

This application claims the benefit of priority to Korean Patent Application No. 10-2023-0065296 filed on May 19, 2023 and Korean Patent Application No. 10-2024-0052072 filed on April 18, 2024 in the Korean Intellectual Property Office, the disclosures of which are incorporated herein by reference in their entirety.

The present disclosure relates to a positive electrode material which comprises lithium-rich manganese-based oxide having a D50 value of a certain level or more as a large particle, and lithium transition metal oxide in the form of a single particle or pseudo-single particle as a small particle, and a positive electrode slurry, positive electrode and lithium secondary battery which comprise the positive electrode material and thus have improved physical properties.

**BACKGROUND**

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The lithium secondary battery generally consists of a positive electrode containing a positive electrode active material, a negative electrode containing a negative electrode active material, an electrolyte that serves as a medium for transferring lithium ions, and a separator. At this time, carbon-based active materials, silicon-based active materials, and the like may be used as the negative electrode active material. Additionally, lithium transition metal oxides having a layered structure such as lithium cobalt oxide ($LiCoO_2$), lithium nickel oxide ($LiNiO_2$), and lithium nickel-cobalt-manganese composite oxide may be used as the positive electrode active material.

In recent years, lithium- and manganese-rich oxides have been attracting attention as a next-generation positive electrode active material. Lithium- and manganese-rich oxides have the advantage of having high capacity by increasing the content of manganese(Mn), which is relatively inexpensive and has abundant reserves. However, such lithium- and manganese-rich oxides have a composition limitation that the rate characteristics are low. Therefore, in order to improve this matter from before, a method of making the primary particles smaller to increase the BET specific surface area of the secondary particles has been applied. However, when applying the positive electrode active material with a large specific surface area made in this way, it may cause another problem that the rolling density of the positive electrode is lowered.

To solve these problems, conventionally, attempts have been made to coat a metal oxide onto the surface of the positive electrode lithium- and manganese-based oxides to thereby enhance the surface stability. However, in this case, the problem of further lowering the rate characteristics has been pointed out as a limitation.

**DETAILED DESCRIPTION OF THE INVENTION**

**Technical Problem**

It is an object of the present disclosure to provide a positive electrode material for a lithium secondary battery that have enhanced electrode density and particle durability by incorporating small particle positive electrode active material in the form of single particles when introducing lithium-rich manganese-based oxides as a positive electrode material.

It is another object of the present disclosure to provide a positive electrode slurry for a lithium secondary battery that has an increased solid content while maintaining appropriate viscosity by including the positive electrode material as described above.

It is yet another object of the present disclosure to provide a positive electrode and a lithium secondary battery that have improved life and resistance characteristics by applying the above positive electrode material.

**Technical Solution**

According to one embodiment, there is provided a positive electrode material for a lithium secondary battery comprising:

a first positive electrode active material containing lithium-rich manganese-based oxide represented by Formula 1 below; and
a second positive electrode active material having one or more particles in the form of a single particle consisting of one nodule or a pseudo-single particle that is a composite of 30 or fewer nodules, and containing lithium transition metal oxide,

wherein the first positive electrode active material has a D50 of 8 μm or more, and has a larger value than the D50 of the second positive electrode active material:

$$[\text{Formula 1}] \qquad Li_{1+a}[Mn_{1-(b+c)}Ni_bM_c]O_{2+d}$$

wherein in Formula 1,

M is at least one selected from the group consisting of Co, Fe, Cr, V, Cu, Zn, Ti, Al, Mg, B, W, Ga, In, Ru, Nb, Sn, Sr and Zr, and

$0.10 \leq a \leq 0.45$, $0 \leq b \leq 0.5$, $0 \leq c \leq 0.5$, $0 < b+c \leq 0.5$, $0 \leq d \leq 1$.

According to another embodiment, there is provided a positive electrode slurry for a lithium secondary battery comprising: the positive electrode material, a binder, a conductive material and a solvent.

According to yet another embodiment, there is provided a positive electrode for a lithium secondary battery comprising a positive electrode current collector; and a positive electrode active material layer provided on the positive electrode current collector and including a positive electrode material,

wherein the positive electrode material comprises a first positive electrode active material containing lithium-rich manganese-based oxide represented by Formula 1, and a second positive electrode active material having one or more particles in the form of a single particle consisting of one nodule or a pseudo-single particle that is a composite of 30 or fewer nodules, and containing lithium transition metal oxide,

wherein the first positive electrode active material has a D50 of 8 μm or more and has a larger value than the D50 of the second positive electrode active material.

According to a further embodiment, there is provided a lithium secondary battery comprising the positive electrode.

## Advantageous Effects

Since the positive electrode material for a lithium secondary battery according to the present disclosure contains lithium-rich manganese-based oxide, it has a high capacity and can have more competitive than a conventional positive electrode active material containing a relatively high content of nickel or cobalt in terms of raw material supply and price.

In addition, the limit point that a conventional lithium-rich manganese-based oxide has, for example, the problem that the rolling density or production process efficiency of the positive electrode deteriorates due to high BET specific surface area, could be solved through mixing with a small particle-diameter positive electrode active material in the form of a substantially single particle.

Specifically, since the positive electrode material according to the present disclosure can realize a slurry with a higher solid content at the same viscosity as compared to a conventional positive electrode material containing only secondary particle form. As a result, it is advantageous to reduce the coating thickness in the electrode production process, and therefore it is easy to control a subsequent rolling process. Therefore, a positive electrode having higher density while having less particle breakage due to the rolling process can be provided.

## BRIEF DESCRIPTION OF THE DRAWINGS

FIG. 1 is a diagram showing the results of analyzing the PSD (volume cumulative particle size distribution) of the powder containing the positive electrode material before and after rolling for the positive electrode material produced in Example 4;

FIG. 2 is a diagram showing the results of analyzing the PSD of the powder containing the positive electrode material before and after rolling for the positive electrode material produced in Comparative Example 2;

FIG. 3 is a diagram showing the change in porosity of the positive electrode active material layer depending on the number of rolling times when manufacturing positive electrodes containing positive electrode materials produced in Example 4 and Comparative Example 2;

FIG. 4 is a diagram showing the results of measuring the rheological properties of the positive electrode slurries containing positive electrode materials produced in Example 4 and Comparative Example 2;

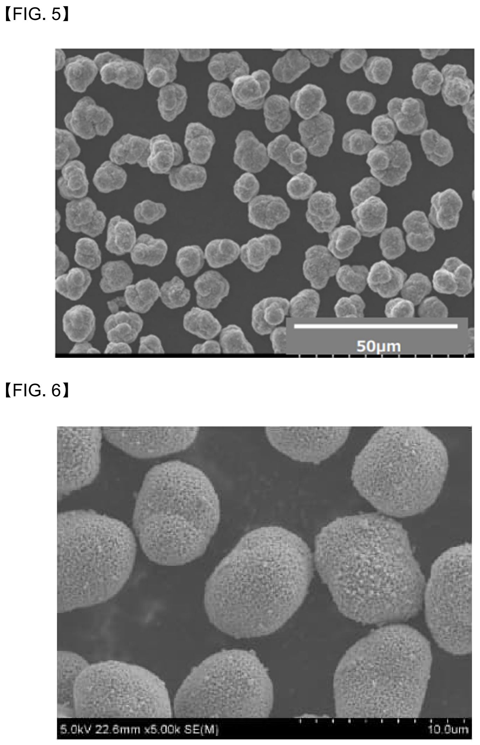

FIG. 5 is a scanning electron microscope image of the positive electrode active material A used in Examples and Comparative Examples;

FIG. 6 is a scanning electron microscope image of the positive electrode active material C used in Examples and Comparative Examples;

FIG. 7 is a scanning electron microscope image of the positive electrode active material D used in Examples and Comparative Examples; and

FIG. 8 is a scanning electron microscope image of a particle cross section of the positive electrode active material A used in Examples and Comparative Examples.

## DETAILED DESCRIPTION OF THE EMBODIMENTS

Specific embodiments of the present disclosure will be described in more detail below.

As used herein, "single particle" refers to a particle consisting of one single nodule, and "pseudo-single particle" refers to a particle that is a composite formed of 30 or fewer nodules. However, unless otherwise specified herein, "single particle" should be considered a generic term of styles including up to "quasi-single particle."

As used herein, "primary particle" refers to a particle having seemingly absent grain boundary when observed with the field of view of 5,000 to 20,000 magnification using a scanning electron microscope, and "secondary particle" refers to a particle formed by agglomeration of a plurality of primary particles.

As used herein, "nodule" refers to a particle unit body constituting a single particle and a quasi-single particle, and the nodule is a single crystal lacking any crystalline grain boundary, or alternatively may be a polycrystal in which grain boundaries do not appear when observed in a field of view of $5,000\times$ to $20,000\times$ using a scanning electron microscope (SEM).

As used herein, "average particle diameter of the primary particle" refers to an arithmetic average value calculated after measuring a particle size of at least 20 primary particles observed from a scanning electron microscope image. At this time, the particle diameter refers to the maximum major-axis diameter of a primary particle.

As used herein, "D50" refers to a particle size corresponding to 50% of a volume cumulative particle size distribution of a powder to be measured, and may be measured by a laser diffraction method. For example, a positive electrode active material powder is dispersed in a dispersion medium, and then introduced into a commercially available laser diffraction particle size measurement device (e.g., Microtrac S-3500) to be irradiated with an ultrasonic wave of about 28 kHz to an output of 60 W. Thereafter, it may be measured by obtaining a volume cumulative particle size distribution graph, and then obtaining a particle diameter at 50% of a volume cumulative amount.

As used herein, "BET specific surface area" is measured by the BET (Brunauer-Emmett-Teller) method, and specifically, it can be calculated from nitrogen adsorption isotherms obtained under a 77K liquid nitrogen atmosphere using BELSORP-MAX (MicrotracBEL Corp.).

Additionally, in the Formulas 1, 1a, 2, and 3 described below, the subscript characters included in each Formula represents the molar ratio of each element.

### Positive electrode material

According to one embodiment of the present disclosure, there is provided a positive electrode material for a lithium secondary battery comprising: a first positive electrode active material containing lithium-rich manganese-based oxide represented by Formula 1 below; and a second positive electrode active material having one or more particles in the form of a single particle consisting of one nodule or a pseudo-single particle that is a composite of 30 or fewer nodules, and containing lithium transition metal oxide, wherein the first positive electrode active material has a D50 of 8 $\mu$m or more, and has a larger value than the D50 of the second positive electrode active material:

[Formula 1]        $Li_{1+a}[Mn_{1-(b+c)}Ni_bM_c]O_{2+d}$

wherein in Formula 1,

M is at least one selected from the group consisting of Co, Fe, Cr, V, Cu, Zn, Ti, Al, Mg, B, W, Ga, In, Ru, Nb, Sn, Sr and Zr, and

$0.10 \leq a \leq 0.45$, $0 \leq b \leq 0.5$, $0 \leq c \leq 0.5$, $0 < b+c \leq 0.5$, $0 \leq d \leq 1$.

In the positive electrode material, the lithium-rich manganese-based oxide contains manganese in an amount of 50 mol% or more, or 55 mol% or more of all metals excluding lithium, and may contain lithium in an excessive molar ratio defined as 1+a. Due to this excessive content of lithium and manganese, the lithium-rich manganese-based oxide may have a two-phase crystal structure in which a rock salt phase and a layered phase are intermingled, and in particular, the rock salt phase may be included in a certain ratio or more. Due to further activation of such a rock salt phase, the lithium-rich manganese-based oxide can have higher capacity and energy density than a conventional layered structure positive electrode active material, e.g., currently commercialized lithium nickel cobalt manganese (NCM)-based active material. In addition, it has the advantage of greatly reducing the amount of usage of cobalt included in the positive electrode material or substantially excluding the inclusion of cobalt, thereby reducing production costs.

However, lithium-rich manganese-based oxide containing a high content of manganese has the disadvantage of high resistance and low rate characteristic because the oxygen redox reaction and the oxidation/reduction reaction of Mn ions proceeds relatively slowly. Consequently, in order to commercialize lithium secondary batteries that applies lithium-rich manganese-based oxide as a positive electrode material, it is necessary to improve these points.

Conventionally, in order to improve these points, a method of reducing the (average) particle size of the primary particles to increase the BET specific surface area of the secondary particles has been applied. However, when such a method is applied, it may cause further problems such as an increase in slurry viscosity, a decrease in electrode processability, occurrence of particle breakage during the rolling process, and a decrease in positive electrode density after rolling.

Therefore, the present inventors have mixed and used lithium-rich manganese-based oxide with a single-particle type active material, and adjusted the D50 of the lithium-rich manganese-based oxide and the single-particle type active material to a certain range. As a result, it was confirmed that it is possible to reduce the slurry viscosity and increase the solid content while increasing the overall specific surface area of the positive electrode material and suppressing the increase in resistance. This allows the coating thickness of the slurry to be lowered, making it easier to dry, and achieving the target thickness with less pressure during the rolling process, which may also reduce stress applied to the positive electrode material.

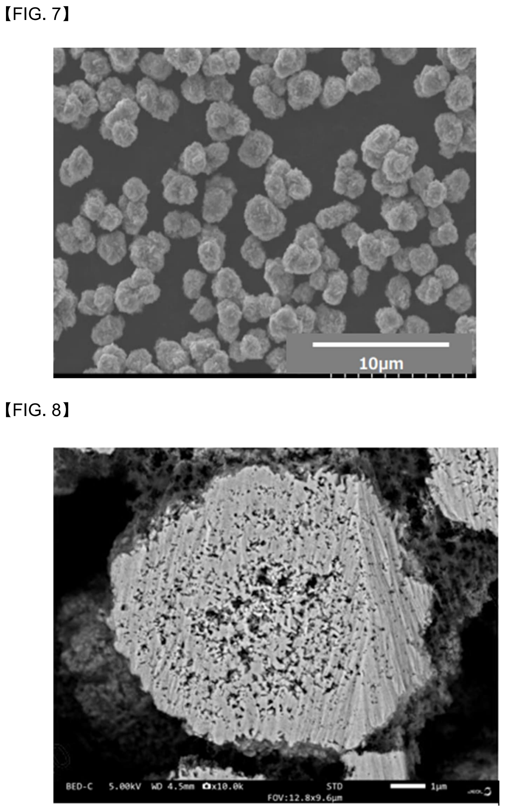

On the other hand, the lithium-rich manganese-based oxide has a BET specific surface area larger than that of an NCM-based active material and has voids existing inside due to the secondary particle shape, so there is a limit in that the density of the electrode is realized to be low and particle breakage during rolling increases. For example, FIG. 8 is an SEM image which observes the particle cross section of the positive electrode active material A used in Examples described hereinafter, through which it can be confirmed that voids are formed large inside the lithium-rich manganese-based oxide particles. However, when applying the positive electrode material of one embodiment, it is easy to control **the rolling** process as described above, and therefore, not only particle breakage during rolling can be suppressed, but also a positive electrode with a higher density after rolling can be provided.

In one embodiment of the present disclosure, the positive electrode material may exhibit a bimodal particle size distribution as a whole due to the mutually different particle size distributions of the first positive electrode active material being a large particle and the second positive electrode active material being a small particle. In this case, since small particles are packed in the voids between large particles during electrode rolling, there is an advantage in that electrode density increases and high energy density can be realized.

On the other hand, in Formula 1, the a is the excess molar ratio of Li contained in the lithium-rich manganese-based oxide, wherein a in Formula 1 may satisfy $0.10 \leq a \leq 0.45$, or $0.15 \leq a \leq 0.4$, or $0.20 \leq a \leq 0.38$. If a satisfies the above range, high capacity can be achieved. Conversely, if the value of a is too small, it becomes difficult to achieve high capacity due to activation of the rock salt phase, etc. If the value of the a is too large, the crystal structure of the lithium-rich manganese-based oxide itself may become unstable, or side reactions or the like may be greatly increased.

Further, the b is the molar ratio of Ni in the lithium-rich manganese-based oxide, wherein b in Formula 1 may satisfy $0 \leq b < 0.5$, or $0.1 \leq b \leq 0.45$, or $0.3 \leq b \leq 0.4$.

The c is the molar ratio of the additional element M in the lithium-rich manganese-based oxide, wherein c in Formula 1 may be $0 \leq c < 0.5$, or $0 \leq c \leq 0.2$, or $0 \leq c \leq 0.1$, or $0 \leq c \leq 0.05$. At this time, the additional element M is an additional element forming the crystal structure of the lithium-rich manganese-based oxide, or may be a doping element or a coating element on the lithium-rich manganese-based oxide. If M is an additional element forming the crystal structure of the lithium-rich manganese-based oxide, M may not include cobalt. Thereby, the two-phase crystal structure of the lithium-rich manganese-based oxide can be stabilized, so that high capacity characteristics or the like can be expressed, and also a production unit price can be reduced.

However, even if cobalt is not included among the elements forming the crystal structure of the lithium-rich manganese-based oxide, such a cobalt may be added as a doping element or a coating element on the lithium-rich manganese-based oxide, and even in such a case, it can be included in the category of lithium-rich manganese-based oxide that does not substantially contain cobalt. At this time, the cobalt content may satisfy the ratio of $c \leq 0.1$, or $0 \leq c \leq 0.05$.

On the other hand, if the content of the additional element of the M is too high, it may not only adversely affect the active material capacity, but also deepen generation of gas during oxygen redox reaction and deterioration of the positive electrode active material, thereby leading to a decrease in the life-time characteristics.

The 1-(b+c) is the molar ratio of Mn in the lithium-rich manganese-based oxide, wherein b and c in Formula 1 may satisfy $0 < b+c \leq 0.5$, or $0 < b+c < 0.5$, or $0.1 \leq b+c \leq 0.45$, or $0.3 \leq b+c \leq 0.4$. In particular, as Mn is contained in a molar ratio larger than that of other metals excluding lithium, for example, satisfies the range such as $0.55 \leq 1-(b+c)$, a sufficient rock salt phase can be contained in the lithium-rich manganese-based oxide. Thereby, excellent capacity expression of the lithium-rich manganese-based oxide can be achieved, and crystal structural stability can be ensured.

The 2+d is the molar ratio of oxygen in the lithium-rich manganese-based oxide, wherein d in Formula 1 may satisfy $0 \leq d \leq 0.5$, $0 \leq d \leq 0.45$ or $0 \leq d \leq 0.4$.

On the other hand, in the lithium-rich manganese-based oxide represented by Formula 1, the ratio of the number of moles of Li to the number of moles of all metal elements excluding Li (Li/Me) may be, for example, 1.10 to 1.45, or 1.15 to 1.4, or 1.20 to 1.38. If the Li/Me ratio satisfies the above range, the rate characteristics and capacity characteristics appear excellently. If the Li/Me ratio is too high, electrical conductivity may decrease, the rock-salt phase ($Li_2MnO_3$) may increase, which may increase the degradation rate. If the Li/Me ratio is too low, the effect of improving energy density is minimal.

On the other hand, in the case of lithium-rich manganese-based oxide containing excess lithium, it has a crystal structure where a layered phase ($LiM'O_2$) and a rock-salt phase ($Li_2MnO_3$) are intermingled, wherein the two-phase crystal structure of the lithium-rich manganese-based oxide can be represented by Formula 1a below. Due to the two-phase crystal structure in which the rock salt phase is intermingled in a certain ratio or more in this way, the lithium-rich manganese-based oxide can be clearly distinguished from the existing layered structure positive electrode active material, and can exhibit higher capacity and energy density even with lower content of nickel and cobalt.

[Formula 1a] $\quad A \cdot Li_2MnO_3 \cdot (1-A) \cdot Li[Ni_{1-n-m}Mn_nM_m]O_2$

wherein in Formula 1a,

M includes at least one selected from the group consisting of Co, Fe, Cr, V, Cu, Zn, Ti, Al, Mg, B, W, Ga, In, Ru, Nb, Sn, Sr and Zr, and
$0.10 \leq A \leq 0.45$, $0.4 \leq n < 1$, $0 \leq m \leq 0.2$.

The A refers to the ratio of the rock salt phase ($Li_2MnO_3$ phase) in the lithium-rich manganese-based oxide, and the n and m each refer to the molar ratio of Mn and the additional element M on the $LiM'O_2$ layer, and can also be converted by the content ratio of each metal element in Formula 1 described above.

On the other hand, if necessary, a coating layer may be further included on the surface of the lithium-rich manganese-based oxide. In this case, contact between the lithium-rich manganese-based oxide and the electrolyte is suppressed by the coating layer, which can reduce electrolyte side reactions and improve life-time characteristics of the battery.

The coating layer may include a coating element $M^1$, wherein the coating element $M^1$ may be, for example, at least one selected from the group consisting of Al, B, Co, W, Mg, V, Ti, Zn, Ga, In, Ru, Nb, Sn, Sr and Zr. In a specific example, the $M^1$ may be Al, Co, Nb, W, or a combination thereof, and in a more specific example, it may be Al, Co, and a combination thereof. The coating element $M^1$ may include two or more types, for example, Al and Co.

The coating element may exist in the form of an oxide in the coating layer, that is, $M^1O_z$ ($1 \leq z \leq 4$).

The coating layer may be formed through methods such as dry coating, wet coating, chemical vapor deposition (CVD), physical vapor deposition (PVD), and atomic layer deposition (ALD). Among these, the coating layer may be formed by atomic layer deposition, in that the coating layer can be formed with a large area.

The formation area of the coating layer may be 10% to 100%, or 30% to 100%, or 50% to 100%, based on the total surface area of the lithium-rich manganese-based oxide particles. When the formation area of the coating layer satisfies the above range, the effect of improving the life-time characteristics is excellent.

On the other hand, the lithium transition metal oxide contained in the second positive electrode active material may be represented by Formula 2 or Formula 3 below.

[Formula 2] $\quad Li_{1+p}(Ni_qCo_rMn_sM^2_t)O_2$

wherein in Formula 2,

$M^2$ includes at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, and
$-0.2 \leq p \leq 0.2$, $0.50 \leq q < 1$, $0 < r \leq 0.40$, $0 < s \leq 0.40$, $0 \leq t \leq 0.10$, $q+r+s+t=1$,

[Formula 3] $\quad Li_{1+w}[Mn_{1-(x+y)}Ni_xM^3_y]O_{2+z}$

wherein in Formula 3,
$M^3$ includes at least one selected from the group consisting of Co, Fe, Cr, V, Cu, Zn, Ti, Al, Mg, B, W, Ga, In, Ru, Nb, Sn, Sr and Zr, and
$0 < w$, $0 \leq x \leq 0.5$, $0 \leq y \leq 0.5$, $0 < x+y \leq 0.5$, $0 \leq z \leq 1$.

In one example, the lithium transition metal oxide contained in the second positive electrode active material is represented by Formula 2, wherein the q, r, s, and t may respectively satisfy $0.60 \leq q < 1$, $0 < r \leq 0.30$, $0 < s \leq 0.30$, and $0 \leq t \leq 0.10$. That is, the lithium transition metal oxide contained in the second positive electrode active material may be a lithium nickel cobalt manganese-based oxide in which the content of nickel in the transition metal is 60 mol % or more.

The $1+p$ represents the molar ratio of lithium in the lithium nickel cobalt manganese-based oxide, wherein $-0.2 \leq p \leq 0.2$, or $-0.1 \leq p \leq 0.2$, or $0 \leq p \leq 0.2$. When the molar ratio of lithium satisfies the above range, the crystal structure of lithium nickel cobalt manganese-based oxide can be stably formed.

The q represents the molar ratio of nickel in all metals excluding lithium in lithium nickel cobalt manganese oxide, wherein $0.50 \leq q < 1$, or $0.60 \leq q < 1$, or $0.70 \leq q < 1$, or $0.80 \leq q < 1$, or $0.85 \leq q < 1$. When the molar ratio of nickel satisfies the above range, it exhibits high energy density, and can achieve high capacity.

**The r represents** the molar ratio of cobalt in all metals excluding lithium in the lithium nickel cobalt manganese oxide, wherein $0 < r \leq 0.40$, or $0 < r \leq 0.30$, or $0 < r \leq 0.20$, or $0 < r \leq 0.15$, or $0 < r \leq 0.10$. When the molar ratio of cobalt satisfies the above range, it can achieve excellent resistance characteristics and output characteristics.

The s represents the molar ratio of manganese in all metals excluding lithium in the lithium nickel cobalt manganese-based oxide, wherein $0 < s \leq 0.40$, or $0 < s \leq 0.30$, or $0 < s \leq 0.20$, or $0 < s \leq 0.15$, or $0 < s \leq 0.10$. When the molar ratio of manganese satisfies the above range, the structural stability of the positive electrode active material is excellently exhibited.

In a specific embodiment of the positive electrode material, the lithium nickel cobalt manganese-based oxide represented by Formula 2 may include at least one additional element selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, and in this case, it is possible to suppress structural deterioration and exhibit improved high-temperature durability. In a specific example, the lithium nickel cobalt manganese-based oxide represented by Formula 2 may include Al as an additional element. Further, the t, which represents the molar ratio of additional elements in all metals excluding lithium in the lithium nickel cobalt manganese-based oxide, may be $0 \leq t \leq 0.10$, or $0 \leq t \leq 0.08$, or $0 \leq t \leq 0.06$, or $0 \leq t \leq 0.05$.

On the other hand, when the lithium transition metal oxide contained in the second positive electrode active material is a compound represented by Formula 3, the description regarding the lithium-rich manganese-based oxide of the first positive electrode active material can be similarly applied.

For example, in Formula 3, the w may satisfy $0 < w$, or $0.10 \leq w \leq 0.45$, or $0.15 \leq w \leq 0.40$, or $0.2 \leq w \leq 0.38$, the x may satisfy $0 \leq x < 0.5$, or $0.1 \leq x \leq 0.45$, or $0.3 \leq x \leq 0.4$, and the y may satisfy $0 \leq y < 0.5$, or $0 \leq y \leq 0.2$, or $0 \leq y \leq 0.1$, or $0 \leq y \leq 0.05$. Further, the $1-(x+y)$ is the molar ratio of Mn in the compound represented by Formula 3, which can satisfy $0 < x+y \leq 0.5$, or $0 < x+y < 0.5$, or $0.1 \leq x+y \leq 0.45$, or $0.3 \leq x+y \leq 0.4$, and the z may satisfy $0 \leq z \leq 1$, or $0 \leq z \leq 0.5$, or $0 \leq z \leq 0.45$ or $0 \leq z \leq 0.4$.

In a specific embodiment, the positive electrode material may include the first positive electrode active material and the second positive electrode active material in a ratio of 50:50 to 90:10, or 50:50 to 80:20, or 60:40 to 70:30, or 60:40 to 65:35. When the weight ratio of the first positive electrode active material and the second positive electrode active material is within the above range, not only the packing density can be increased while appropriately packing the space between the large particles with small particles, but also the rolling stress can be alleviated during the rolling process.

On the other hand, the first positive electrode active material may be composed of secondary particles formed by agglomeration of a plurality of primary particles, and the D50 of the first positive electrode active material may be 8 $\mu$m or more, or 8 $\mu$m to 15 $\mu$m, or 8 $\mu$m to 12 $\mu$m, based on the secondary particles. When the D50 of the first positive electrode active material is less than 8 $\mu$m, **the** difference in particle size from the second positive electrode active material becomes small, which may make it difficult to sufficiently achieve the effect of improving the packing density due to the bimodal configuration.

Further, the BET specific surface area of the first positive electrode active material may be 1.3 m$^2$/g or more, or 1.5 m$^2$/g or more, so that high capacity and efficiency can be achieved. However, considering electrode processability, large surface area, and problems of increased surface side reactions and unevenness due to low sphericity, the BET specific surface area may be 4.0 m$^2$/g or less, or 3.0 m$^2$/g or less.

Moreover, the D50 of the second positive electrode active material may be 2 $\mu$m to 5 $\mu$m, or 2.5 $\mu$m to 4.5 $\mu$m, and the BET specific surface area of the second positive electrode active material may be 0.5 m$^2$/g to 1.2 m$^2$/g. Due to the D50 or the like of the second positive electrode active material, the voids between the first positive electrode active material particles are effectively packed, particle breakage during rolling is reduced, and a positive electrode with a higher density after rolling can be provided.

On the other hand, in the positive electrode material according to one embodiment described above, the particle breakage ratio of the first positive electrode active material according to Equation 1 below may be 20% or less, or 0% to 18%, or 3% to 15%:

Particle breakage ratio (%) of the first positive electrode active material = Particle distribution ratio (%) at the maximum peak obtained from the PSD (volume cumulative particle size distribution) of the positive electrode material before rolling - Particle distribution ratio (%) at the maximum peak obtained from the PSD of the positive electrode material after rolling

Equation 1

wherein in Equation 1,

the PSD of the positive electrode material before rolling refers to the PSD of the powder obtained by drying and pulverizing the positive electrode slurry containing the positive electrode material, and

the PSD of the positive electrode material after rolling refers to the PSD of the positive electrode material powder recovered from the positive electrode containing the positive electrode material and having a porosity of 30% or less.

**Positive electrode slurry**

Next, a positive electrode slurry comprising the positive electrode material according to one embodiment described above will be described.

The positive electrode slurry includes the positive electrode material of one embodiment described above, a binder, a conductive material, and a solvent.

In a specific embodiment, the positive electrode slurry may have a solid content of 65 wt.% or more relative to the total weight of the positive electrode slurry, and a viscosity of 14,500 cP or less. In other words, this means that by including the above-mentioned positive electrode material, the solid content can be secured at a certain level or more without excessively increasing the viscosity, thereby securing both the capacity and processability of the positive electrode. At this time, the solid content is measured by a method of drying a positive electrode slurry in an oven to remove all solvent and measuring the remaining weight, and the viscosity is measured at 25°C using a Brookfield DV2T LV TJ0 model viscometer with spindle 64 (LV-03) at 12 rpm.

Specifically, the solid content in the positive electrode slurry may be 66 wt.% or more, or 67 wt.% or more, or 68 wt.% or more. As the solid content in the slurry is higher, it is more preferable from the viewpoint of suppressing binder migration and increasing electrode productivity. In the case of dry electrodes, the solid content may be 100 wt.%, but when a solvent is used, it may be 85 wt.% or less in order to prevent the viscosity from becoming excessively high. Meanwhile, the viscosity of the positive electrode slurry may be 14,000 cP or less, or 13,000 cP or less, or 12,000 cP or less, considering ease of slurry transport and coating processability. However, when considering slurry precipitation and phase stability, it may be 5,000 cP or more, more specifically 8,000 cP or more.

On the other hand, the positive electrode active material may be included in an amount of 90 wt.% to 99 wt.%, specifically 95 wt.% to 99 wt.%, and more specifically 97 wt.% to 98 wt.%, based on the total weight of solids in the positive electrode slurry. If the content of the positive electrode active material in the solid content is 90 wt.% or less, the energy density may become low, and the capacity may decrease.

On the other hand, the binder may include any one or more selected from the group consisting of polyvinylidenefluoride(PVDF), a polyvinylidenefluoride-hexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber(SBR), fluorine rubber, and various copolymers thereof, and specifically, it may include polyvinylidenefluoride (PVDF).

The binder may be included in an amount of 0.5wt.% to 2.5 wt.%, or 1wt.% to 2 wt.%, or 1.5wt.% to 2 wt.%, based on the total weight of solids in the positive electrode slurry. When the binder content is within the above range, adhesion with the current collector and bonding between particles can be sufficiently ensured, and the initial resistance can be kept low while improving the durability of the positive electrode.

The conductive material may be one or more selected from the group consisting of graphite such as natural graphite and artificial graphite; carbon black such as acetylene black, ketjen black, channel black, furnace black, lamp black, and thermal black; carbon-based materials such as carbon fiber and carbon nanotube, metal powder or metal fibers such as copper, nickel, aluminum and silver; conductive whiskey such as zinc oxide and potassium titanate; conductive metal oxides such as titanium oxide; or a conductive polymer such as a polyphenylene derivative. More specifically, the conductive material may be carbon nanotube or carbon black.

The conductive material may be included in an amount of 0.1wt.% to 2.5 wt.%, or 0.3wt.% to 2 wt.%, or 0.5wt.% to 1 wt.%, based on the total weight of solids in the positive electrode slurry. When the content of the conductive material is within the above range, dead volume within the active material layer can be reduced while maintaining conductivity between the active materials.

In addition, the positive electrode slurry may optionally further include a dispersant, and the dispersant may be hydrogenated nitrile butadiene rubber(HNBR).

Meanwhile, the solvent of the positive electrode slurry may be a solvent commonly used in the technical field. For example, N-methylpyrrolidone(NMP), dimethyl sulfoxide(DMSO), isopropyl alcohol, dimethyl formamide(DMF), acetone, water or a mixture of two or more types thereof, etc. may be used. The solvent can be used in an amount adjusted to the extent that it has the viscosity of the positive electrode slurry described above.

## Positive electrode

Next, the positive electrode comprising the positive electrode material of one embodiment will be described.
According to another embodiment of the present disclosure, there is provided a positive electrode comprising a positive electrode current collector; and a positive electrode active material layer provided on the positive electrode current collector and including a positive electrode material,

wherein the positive electrode material comprises a first positive electrode active material containing lithium-rich manganese-based oxide represented by Formula 1, and a second positive electrode active material having one or more particles in the form of a single particle consisting of one nodule or a pseudo-**single particle** that is a composite of 30 or fewer nodules, and containing lithium transition metal oxide, and
wherein the first positive electrode active material has a D50 of 8 $\mu$m or more and has a larger value than the D50 of the second positive electrode active material.

In addition, it includes a positive electrode active material layer formed by coating the above-mentioned positive electrode slurry onto at least one surface of the positive electrode current collector.
Since the positive electrode material and the positive electrode slurry have been described above, a detailed description thereof will be omitted, and only the remaining configuration will be described in detail below.
The positive electrode current collector may contain a metal with high conductivity, and the positive electrode active material layer is easily adhered, but is not particularly limited as long as it has no reactivity within the voltage range of the battery. As the positive electrode current collector, for example, stainless steel, aluminum, nickel, titanium, calcinated carbon, or aluminum or stainless steel of which surface is treated with carbon, nickel, titanium, silver, or the like may be used. The positive electrode current collector may generally have a thickness of 3 $\mu$m to 500 $\mu$m, and the positive electrode current collector may have fine protrusions and depressions formed on a surface thereof to enhance adherence of a positive electrode active material. For example, the positive electrode current collector may be used in various forms such as a film, a sheet, a foil, a net, a porous body, a foaming body, and a non-woven fabric structure.
The positive electrode can be produced according to a conventional positive electrode manufacturing method except for using the above-mentioned positive electrode material. Specifically, it is produced by applying the positive electrode slurry on a positive electrode current collector, followed by drying and rolling, or alternatively, can be produced by casting the positive electrode slurry on a separate support and then laminating the film obtained by peeling from this support onto the positive electrode current collector.
On the other hand, the positive electrode has a rolling density of 2.9 g/cc or more, or 2.91 g/cc or more, or 2.97 g/cc or more and 3.50 g/cc or less when pressurized to 7 ton/1.327 cm$^2$ at room temperature. As mentioned above, despite the high BET specific surface area and porosity of the lithium-rich manganese-based oxide, energy density can be improved by achieving a high rolling density in this way.
Additionally, the positive electrode may have a loading amount of 420mg/25cm$^2$ to 540mg/25cm$^2$, or 440mg/25cm$^2$ to 520mg/25cm$^2$, or 460mg/25cm$^2$ to 500mg/25cm$^2$. When the loading amount is within the above range, there is an advantage in that electrode processability and output can be appropriately secured while realizing high energy density.

## Lithium secondary battery

Next, a lithium secondary battery according to yet another embodiment of the present disclosure will be described.
**The lithium** secondary battery specifically includes a positive electrode, a negative electrode positioned opposite to the positive electrode, a separator interposed between the positive electrode and the negative electrode, and an electrolyte, wherein since the positive electrode is the same as described above, a detailed description thereof will be omitted, and only the remaining configuration will be described in detail below.
In addition, the lithium secondary battery may optionally further include a battery container that houses the electrode assembly of the positive electrode, the negative electrode, and the separator, and a sealing member that seals the battery container.
In the lithium secondary battery, the negative electrode includes a negative electrode current collector and a negative electrode active material layer located on the negative electrode current collector.

The negative electrode current collector is not particularly limited as long as it has high conductivity without causing a chemical change in the battery, and, for example, copper, stainless steel, aluminum, nickel, titanium, calcinated carbon, or copper or stainless steel of which surface is treated with carbon, nickel, titanium, silver, or the like, an aluminum-cadmium alloy, or the like may be used. Further, the negative electrode current collector may generally have a thickness of 3 μm to 500 μm. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material layer may optionally further include a binder and a conductive material together with a negative electrode active material.

As the negative electrode active material, a compound capable of reversible intercalation and deintercalation of lithium may be used. Specific examples of the negative electrode active material may include a carbonaceous material such as artificial graphite, natural graphite, graphitized carbon fiber or amorphous carbon; a (semi)metal-based material capable of alloying with lithium, such as Si, Al, Sn, Pb, Zn, Bi, In, Mg, Ga, Cd, Si alloy, Sn alloy, or Al alloy; (semi)metal oxides capable of doping and de-doping lithium, such as $SiO_\beta$ (0< β < 2), $SnO_2$, vanadium oxide, and lithium vanadium oxide; a composite containing the (semi)metal-based material and the carbonaceous material, such as Si-C composite or Sn-C composite, and any one alone or a mixture of two or more thereof can be used. In addition, as the negative electrode active material, a metal lithium thin film may be used. Further, the negative electrode active material may be contained in an amount of 80 wt.% to 99 wt.% based on a total weight of the negative electrode active material layer.

The binder is a component that assists in the binding between conductive material, the active material and the current collector, and is added in an amount of 0.1 wt.% to 10 wt.% based on a total weight of the negative electrode active material layer. Examples of the binder include polyvinylidene fluoride(PVDF), polyvinyl alcohol, starch, carboxymethylcellulose(CMC), hydroxypropyl cellulose, regenerated cellulose, polyvinylpyrrolidone, polytetrafluoroethylene, polyethylene, polypropylene, ethylene-propylene-diene monomer (EPDM), a sulfonated-EPDM, a styrene-butadiene rubber, a nitrile-butadiene rubber, a fluoro rubber, various copolymers thereof, and the like.

The conductive material is a component that further improves the conductivity of the negative electrode active material, and may be added in an amount of 10 wt.% or less, or 5 wt.% or less, or 0.1 wt.% to 4 wt.% based on the total weight of the negative electrode active material layer. Such a conductive material is not particularly limited as long as it has conductivity without causing a chemical change in the battery, and, for example, graphite such as natural graphite and artificial graphite; carbon black such as acetylene black, Ketjen black, channel black, furnace black, lamp black, or thermal black; conductive fibers such as carbon fibers or metal fibers; fluorinated carbon; metal powder such as aluminum powder, and nickel powder; conductive whiskers such as zinc oxide whiskers and potassium titanate whiskers; conductive metal oxide such as titanium oxide; or polyphenylene derivatives, may be used.

The negative electrode active material layer can be produced by applying and drying a negative electrode mixture prepared by dissolving or dispersing the negative electrode active material and optionally the binder and the conductive material in a solvent on the negative electrode current collector, or alternatively, can be produced by casting the negative electrode mixture onto a separate support and then laminating the film obtained by being peeled off from this support onto the negative electrode current collector.

On the other hand, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

In addition, the electrolyte used in the lithium secondary battery may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a secondary battery from before, but is not limited thereto.

Specifically, the electrolyte may include an organic solvent and a lithium salt.

The organic solvent can be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond, an aromatic ring or ether bond); amides such as dimethylformamide; dioxolanes such as 1,3-dioxolane; or sulfolanes may be used. Among these solvents, a carbonate-based solvent is suitable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

The lithium salt can be used without particular limitation as long as it may provide lithium ions used in a lithium secondary battery. Specifically, the anion of the lithium salt may include at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like may be used. The lithium salt may be used in a concentration range of 0.1 M to 4.0 M. When the concentration of the lithium salt is in the above range, the electrolyte has suitable conductivity and viscosity, thereby exhibiting excellent electrolyte performance, and lithium ions may effectively move.

In addition to the electrolyte components, to improve the life-time characteristics of a battery, suppress capacity reduction of a battery, and improve discharge capacity of a battery, the electrolyte may further contain one more additives of, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like. At this time, the additive may be included in an amount of 0.1 to 5 parts by weight based on a total weight of the electrolyte.

The lithium secondary battery comprising the positive electrode material of one embodiment as described above stably exhibits excellent discharging capacity, output properties, and life properties, and thus, are useful for portable devices such as a mobile phone, a notebook computer, and a digital camera, and in the field of electric cars such as a hybrid electric vehicle(HEV).

Therefore, according to an additional embodiment, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle(EV), a hybrid electric vehicle(HEV), and a plug-in hybrid electric vehicle(PHEV), or a power storage system.

The external shape of the lithium secondary battery contained in such a module or pack is not particularly limited, but may be a cylindrical shape using a can, a square shape, a pouch shape, a coin shape, or the like.

Such a lithium secondary battery may be used in a battery cell which is used as a power source for a small-sized device, and may also be used as a unit cell for a medium- and large-sized battery module including a plurality of battery cells.

Examples of the medium- and large-sized device include, but are not limited to, electric vehicles, hybrid electric vehicles, plug-in hybrid electric vehicles, power storage systems, and the like.

Hereinafter, the present disclosure will be described in more detail with reference to specific examples.

### <Example: Production of positive electrode material>

The positive electrode active materials A to G used in the following Examples and Comparative Examples were commercially obtained and used, each having the composition and characteristics as shown in Table 1 below.

[Table 1]

|  | Compositional formula | D50 (μm) | Particle shape | SEM image | BET specific surface area (m²/g) |
|---|---|---|---|---|---|
| Positive electrode active material A | $Li_{1.36}[Mn_{0.65}Ni_{0.35}]O_2$ | 10 | secondary particle | Fig. 5 | 3.8 |
| Positive electrode active material B | $Li_{1.36}[Mn_{0.65}Ni_{0.35}]O_2$ | 8.5 | secondary particle | - | 2.4 |

(continued)

|  | Compositional formula | D50 (μm) | Particle shape | SEM image | BET specific surface area (m²/g) |
|---|---|---|---|---|---|
| Positive electrode active material C | $Li_{1.36}[Mn_{0.65}Ni_{0.35}]O_2$ | 6.2 | secondary particle | Fig. 6 | 2.1 |
| Positive electrode active material D | $Li_{1.36}[Mn_{0.65}Ni_{0.35}]O_2$ | 3 | secondary particle | Fig. 7 | 3.7 |
| Positive electrode active material E | $Li_{1.03}[Ni_{0.60}Co_{0.10}Mn_{0.30}]O_2$ | 3.7 | single particle | - | 0.9 |
| Positive electrode active material F | $Li_{1.03}[Ni_{0.86}Co_{0.08}Mn_{0.06}]O_2$ | 4.3 | single particle | - | 0.7 |
| Positive electrode active material G | $Li_{1.03}[Ni_{0.86}Co_{0.08}Mn_{0.06}]O_2$ | 3.7 | single particle | - | 0.8 |

**Example** 1.

A positive electrode material was produced by mixing the positive electrode active material A and the positive electrode active material E at a weight ratio of 70:30.

Example 2.

A positive electrode material was produced by mixing the positive electrode active material B and the positive electrode active material F at a weight ratio of 65:35.

**Example 3.**

A positive electrode material was produced by mixing the positive electrode active material A and the positive electrode active material G at a weight ratio of 60:40.

**Example 4.**

A positive electrode material was produced by mixing the positive electrode active material A and the positive electrode active material G at a weight ratio of 65:35.

**Example 5.**

A positive electrode material was produced by mixing the positive electrode active material A and the positive electrode active material G at a weight ratio of 70:30.

**Example 6**

A positive electrode material was produced by mixing the positive electrode active material A and the positive electrode active material G at a weight ratio of 50:50.

**Example 7**

A positive electrode material was produced by mixing the positive electrode active material A and the positive electrode active material G at a weight ratio of 80:20.

**Comparative Example 1**

Only the positive electrode active material C was used alone as the positive electrode material.

**Comparative Example 2**

A positive electrode material was produced by mixing the positive electrode active material A and the positive electrode active material D at a weight ratio of 65:35.

**Comparative Example 3**

A positive electrode material was produced by mixing the positive electrode active material C and the positive electrode active material G at a weight ratio of 65:35.

**<Experiment Example>**

**Experimental Example 1.**

**(1) Preparation of positive electrode slurry**

A positive electrode slurry was prepared from each positive electrode material produced in the previous Examples and Comparative Examples by the following method.

First, positive electrode material powder, carbon nanotubes as a conductive material, polyvinylidene fluoride as a binder, and a dispersant including HNBR were added to N-methylpyrrolidone as a solvent at a weight ratio of 97.46:0.62:1.7:0.22, and mixed for 75 minutes at a speed of 2,500 rpm using a Homo disper to prepare a positive electrode slurry.

**(2) Measurement of solid content and viscosity of positive electrode slurry**

Each positive electrode slurry prepared in the above (1) was dried in an oven to remove all solvent, and then the remaining weight was measured to thereby confirm the solid content. Further, 2/3 or more of the volume of each positive electrode slurry was filled into a 250mL bottle, and then the viscosity was measured at 25°C using a Brookfield DV2T LV TJ0 model viscometer with spindle 64 (LV-03) at 12 rpm. The measurement results are listed in Table 2 below.

**(3) Measurement of rheological properties of positive electrode slurry**

Among the positive electrode slurries prepared in the above (1), the shear viscosity corresponding to the shear rate was measured for the positive electrode slurries containing the positive electrode materials of Example 4 and Comparative Example 2, respectively.

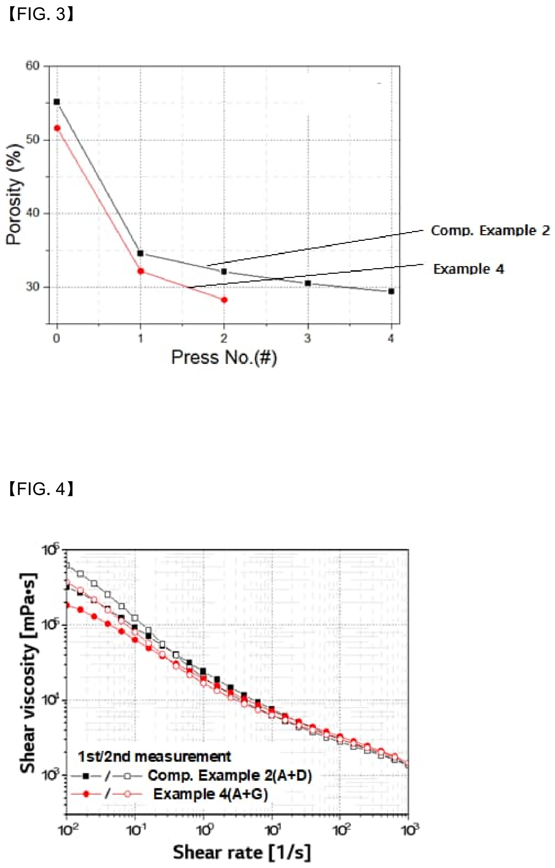

Specifically, Rheometer (DHR2) (TA Instrument) was used, and 10 mL of each positive electrode slurry was taken, placed in a concentric cylinder within the device, and the shear viscosity was measured while gradually increasing the shear rate at 25°C. The same process was repeated a total of two times, and the measurement results are shown in FIG. 4.

**Experimental Example 2.**

**(1) Production of powder containing positive electrode material**

Each positive electrode slurry prepared in Experimental Example 1 was vacuum dried at a temperature of 130°C for 3 hours, then finely ground with a mortar and pestle, and then classified using a 250 mesh sieve to prepare a powder containing the positive electrode material from the slurry.

**(2) Measurement of rolling density of powder containing positive electrode material**

2 g of each powder prepared in the above (1) was placed in a cylindrical metal mold inside a powder resistance measuring device (HPRM-1000, Hantech) and pressurized with a surface pressure of 7 tons/1.327 $cm^2$. The height of the pressurized mold was measured with Vernier calipers and used to calculate the rolling density, and the results are shown in Table 2 below.

**(3)** Measurement of PSD of powder containing positive electrode material

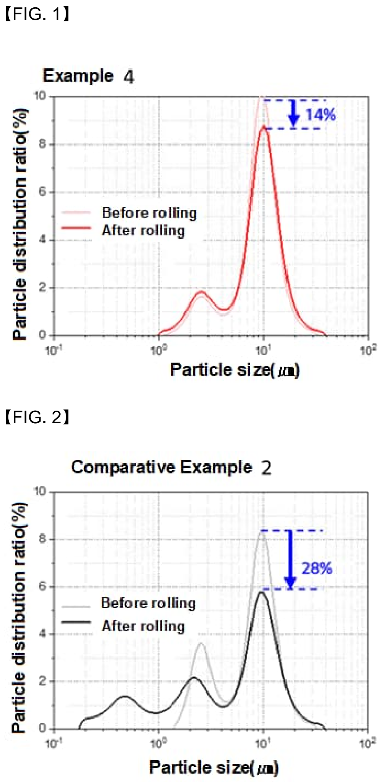

Among the powders prepared in the above (1), the volume cumulative particle size distribution (PSD) of the powder containing the positive electrode material of Example 4 was obtained using Microtrac's S-3500. The obtained particle size distribution graph is shown as data before rolling in FIG. 1 below.

PSD was obtained in the same way for the powder containing the positive electrode material of Comparative Example 2, which is shown as data before rolling in FIG. 2 below.

Experimental Example 3.

(1) Positive electrode slurry coating

Each of the positive electrode slurries prepared in the (1) of Experimental Example 1 was applied to a 15 $\mu$m thick aluminum thin film as a positive electrode current collector at a loading amount of 480 mg/25cm$^2$, and dried at 130° C to form the positive electrode active material layer. In this state, the thickness of the positive electrode active material layer was measured, and listed in Table 2 below.

(2) Rolling

With respect to the slurry containing the positive electrode material of Example 4 and Comparative Example 2, a positive electrode active material layer was coated onto the positive electrode current collector as described in the above (1). Then, rolling was repeatedly performed using a roll press until the porosity of the positive electrode active material layer reached less than 30%. A graph observing the change in porosity of the positive active material layer depending on the number of times of rolling is shown in FIG. 3. At this time, the porosity was calculated using the true density of the raw material after measuring the thickness of the electrode.

**(3) Measurement of PSD of positive electrode**

The positive electrode of Example 4 (porosity 28.3%) whose porosity was adjusted to 30% or less in the above (2) was heat-treated in a furnace at a temperature of 700°C for 10 hours to collect the positive electrode material, which was then finely ground with a mortar and pestle, and classified using a 250 mesh sieve to obtain positive electrode material powder. The volume cumulative particle size distribution (PSD) of the obtained powder was obtained using Microtrac's S-3500. The obtained particle size distribution graph is shown as data after rolling in FIG. 1.

The PSD of the positive electrode of Comparative Example 2 (porosity: 29.4%) was obtained by the same method, and was shown as data after rolling in FIG. 2.

[Table 2]

| | Experimental Example 1 | | Experimental Example 2 | Experimental Example 3 |
|---|---|---|---|---|
| | Solid content (wt%) | Viscosity (cP) | Rolling density (g/cc) | Thickness of coated positive electrode active material layer (nm) |
| Example 1 | 68 | 12,310 | 2.99 | 110 |
| Example 2 | 68 | 11,840 | 2.98 | 111 |
| Example 3 | 68 | 10,650 | 2.97 | 113 |
| Example 4 | 68 | 12,589 | 2.99 | 109 |
| Example 5 | 68 | 14,100 | 3.00 | 110 |
| Example 6 | 66 | 13,700 | 2.92 | 115 |
| Example 7 | 68 | 13,800 | 2.96 | 113 |
| Comparative Example 1 | 63 | 12,500 | 2.80 | 131 |
| Comparative Example 2 | 66 | 14,693 | 2.83 | 118 |
| Comparative Example 3 | 64 | 11,900 | 2.85 | 125 |

First, from the results in Table 1, it was confirmed that in the case of the slurries containing the positive electrode materials of Examples, the solid content is 65 wt.% or more and the viscosity does not exceed 14,500 cP. Thereby, it becomes advantageous to lower the thickness of the positive electrode active material layer, and it becomes easier to control the rolling process, and as a result, it was confirmed that all Examples exhibit the rolling densities of 2.9 g/cc or more.

On the other hand, it was confirmed that Comparative Example 1 containing only a lithium-rich manganese-based oxide corresponding to the first positive electrode active material, Comparative Example 2 using a positive **electrode** active material in the form of secondary particles as the second positive electrode active material, and Comparative Example 3 in which the lithium-rich manganese-based oxide had a D50 of 6.7 μm and did not exhibit bimodal characteristics, exhibit lower solids content, higher viscosity, or lower rolling density under the same rolling conditions as compared to Examples 1 to 7.

In addition, referring to FIGS. 1 and 2 which compare Comparative Example 2 using a positive electrode active material in the form of secondary particles as the second positive electrode active material, and Example 4, it was confirmed that in Example 4, particle breakage phenomenon of large particles before and after rolling occurs at a very small rate compared to Comparative Example 2. Specifically, it was confirmed that in Example 4, the particle breakage ratio of the first positive electrode active material according to Equation 1 is 14%, but in Comparative Example 2, the particle breakage ratio of the first positive electrode active material according to Equation 1 is 28%.

On the other hand, referring to FIG. 3, it was confirmed that in Example 4, the porosity drops to 30% or less even after rolling only twice, but in Comparative Example 2, the porosity drops to 30% or less only after four rolling four times.

In addition, referring to FIG. 4, it was confirmed that the slurry obtained from Example 4 has a lower viscosity compared to Comparative Example 2.

On the other hand, looking at Examples 3 to 7 in which positive electrode active material A was used as the first positive electrode active material and positive electrode active material G was used as the second positive electrode active material, but only the ratio between them was changed, it was confirmed that in Examples 3 to 5, in which the weight ratio was set to 60:40 to 70:30, the solid content is 68 wt.% while the viscosity being 14,500 cP or less, and at the same time, the rolling density is secured as 2.97 g/cc or more. In particular, it was confirmed that in Examples 3 and 4 in which the weight ratio was set to 60:40 to 65:35, the viscosity does not exceed 13,000 cP, the solid content is 68 wt.%, and the rolling density is secured as 2.97 g/cc or more, thereby exhibiting low viscosity ensuring excellent processability along with higher solids content and rolling density.

**Claims**

1. A positive electrode material for a lithium secondary battery comprising:

   a first positive electrode active material containing lithium-rich manganese-based oxide represented by Formula 1 below; and
   a second positive electrode active material having one or more particles in the form of a single particle consisting of one nodule or a pseudo-single particle that is a composite of 30 or fewer nodules, and containing lithium transition metal oxide,
   wherein the first positive electrode active material has a D50 of 8 μm or more, and has a larger value than the D50 of the second positive electrode active material:

   $$[\text{Formula 1}] \qquad Li_{1+a}[Mn_{1-(b+c)}Ni_bM_c]O_{2+d}$$

   wherein in Formula 1,
   M is at least one selected from the group consisting of Co, Fe, Cr, V, Cu, Zn, Ti, Al, Mg, B, W, Ga, In, Ru, Nb, Sn, Sr and Zr, and
   $0.10 \leq a \leq 0.45$, $0 \leq b \leq 0.5$, $0 \leq c \leq 0.5$, $0 < b+c \leq 0.5$, $0 \leq d \leq 1$.

2. The positive electrode material for a lithium secondary battery according to claim 1, wherein:
   the positive electrode material exhibits a bimodal particle size distribution as a whole due to the mutually different particle size distributions of the first positive electrode active material and the second positive electrode active material.

3. The positive electrode material for a lithium secondary battery according to claim 1, wherein the first positive electrode active material does not substantially contain cobalt.

4. The positive electrode material for a lithium secondary battery according to claim 1, wherein:

   the lithium transition metal oxide contained in the second positive electrode active material is represented by Formula 2 or Formula 3 below:

   $$[\text{Formula 2}] \qquad Li_{1+p}(Ni_qCo_rMn_sM^2_t)O_2$$

   wherein in Formula 2,
   $M^2$ is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, and
   $-0.2 \leq p \leq 0.2$, $0.50 \leq q < 1$, $0 < r \leq 0.40$, $0 < s \leq 0.40$, $0 \leq t \leq 0.10$, $q+r+s+t=1$,

   $$[\text{Formula 3}] \qquad Li_{1+w}[Mn_{1-(x+y)}Ni_xM^3_y]O_{2+z}$$

   wherein in Formula 3,
   $M^3$ is at least one selected from the group consisting of Co, Fe, Cr, V, Cu, Zn, Ti, Al, Mg, B, W, Ga, In, Ru, Nb, Sn, Sr and Zr, and
   $0 < w$, $0 \leq x \leq 0.5$, $0 \leq y \leq 0.5$, $0 < x+y \leq 0.5$, $0 \leq z \leq 1$.

5. **The positive** electrode material for a lithium secondary battery according to claim 4, wherein:
   the lithium transition metal oxide contained in the second positive electrode active material is represented by Formula 2, wherein the q, r, s, and t satisfy $0.60 \leq q < 1$, $0 < r \leq 0.30$, $0 < s \leq 0.30$, $0 \leq t \leq 0.10$, respectively.

6. The positive electrode material for a lithium secondary battery according to claim 1, wherein:
   b and c in Formula 1 satisfy $0.1 \leq b+c \leq 0.45$.

7. The positive electrode material for a lithium secondary battery according to claim 1, wherein:
   the first positive electrode active material and the second positive electrode active material are included in a weight ratio of 90:10 to 60:40.

8. The positive electrode material for a lithium secondary battery according to claim 1, wherein:
   the D50 of the first positive electrode active material is 8 $\mu$m to 15 $\mu$m.

9. The positive electrode material for a lithium secondary battery according to claim 1, wherein:
   the D50 of the second positive electrode active material is 2 $\mu$m to 5 $\mu$m.

10. The positive electrode material for a lithium secondary battery according to claim 1, wherein:
    the BET specific surface area of the first positive electrode active material is 1.3 $m^2$/g to 4.0 $m^2$/g.

11. The positive electrode material for a lithium secondary battery according to claim 1, wherein:
    the first positive electrode active material has a crystal structure in which a layered phase and a rock salt phase are intermingled.

12. The positive electrode material for a lithium secondary battery according to claim 1, wherein:

    the first positive electrode active material has a two-phase crystal structure represented by Formula 1a below:

    $$[\text{Formula 1a}] \qquad A \cdot Li_2MnO_3 \cdot (1-A) \cdot Li[Ni_{1-n-m}Mn_nM_m]O_2$$

    wherein in Formula 1a,
    M includes at least one selected from the group consisting of Co, Fe, Cr, V, Cu, Zn, Ti, Al, Mg, B, W, Ga, In, Ru, Nb, Sn, Sr and Zr, and
    $0.10 \leq A \leq 0.45$, $0.4 \leq n < 1$, $0 \leq m \leq 0.2$

13. The positive electrode material for a lithium secondary battery according to claim 1, wherein:

    the particle breakage ratio of the first positive electrode active material according to Equation 1 below is 20% or less:

Particle breakage ratio (%) of the first positive electrode active material = Particle distribution ratio (%) at the maximum peak obtained from the PSD (volume cumulative particle size distribution) of the positive electrode material before rolling - Particle distribution ratio (%) at the maximum peak obtained from the PSD of the positive electrode material after rolling

Equation 1

wherein in Equation 1,
the PSD of the positive electrode material before rolling refers to the PSD of the powder obtained by drying and pulverizing the positive electrode slurry containing the positive electrode material, and
the PSD of the positive electrode material after rolling refers to the PSD of the positive electrode material powder recovered from the positive electrode containing the positive electrode material and having a porosity of 30% or less.

14. A positive electrode slurry for a lithium secondary battery comprising: the positive electrode material according to any one of claims 1 to 13, a binder, a conductive material and a solvent.

15. The positive electrode slurry for a lithium secondary battery according to claim 14, wherein:
the positive electrode slurry has a solid content of 65 wt.% or more relative to the total weight of the positive electrode slurry, and a viscosity of 14,500 cP or less.

16. A positive electrode for a lithium secondary battery comprising a positive electrode current collector; and a positive electrode active material layer provided on the positive electrode current collector and including a positive electrode material,

wherein the positive electrode material comprises a first positive electrode active material containing lithium-rich manganese-based oxide represented by Formula 1 below, and a second positive electrode active material having one or more particles in the form of a single particle consisting of one nodule or a pseudo-single particle that is a composite of 30 or fewer nodules, and containing lithium transition metal oxide,
wherein the first positive electrode active material has a D50 of 8 $\mu$m or more and has a larger value than the D50 of the second positive electrode active material:

$$[\text{Formula 1}] \qquad Li_{1+a}[Mn_{1-(b+c)}Ni_bM_c]O_{2+d}$$

wherein in Formula 1,
M is at least one selected from the group consisting of Co, Fe, Cr, V, Cu, Zn, Ti, Al, Mg, B, W, Ga, In, Ru, Nb, Sn, Sr and Zr, and
$0.10 \leq a \leq 0.45$, $0 \leq b \leq 0.5$, $0 \leq c \leq 0.5$, $0 < b+c \leq 0.5$, $0 \leq d \leq 1$.

17. The positive electrode for a lithium secondary battery according to claim 16, wherein:
when pressurized to $7\text{ton}/1.327\text{cm}^2$ at room temperature, the rolling density is 2.9g/cc or more.

18. The positive electrode for a lithium secondary battery according to claim 16, wherein:
the loading amount is $420\text{mg}/25\text{cm}^2$ to $540\text{mg}/25\text{cm}^2$.

19. A lithium secondary battery comprising the positive electrode for a lithium secondary battery according to claim 16.

【FIG. 1】

【FIG. 2】

【FIG. 3】

【FIG. 4】

【FIG. 5】

【FIG. 6】

【FIG. 7】

【FIG. 8】

## INTERNATIONAL SEARCH REPORT

| | International application No. |
|---|---|
| | **PCT/KR2024/005282** |

**A. CLASSIFICATION OF SUBJECT MATTER**

**H01M 4/36**(2006.01)i; **H01M 4/505**(2010.01)i; **H01M 4/525**(2010.01)i; **H01M 4/131**(2010.01)i; **H01M 4/1391**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); C01G 53/00(2006.01); H01M 10/052(2010.01); H01M 10/0525(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 과리튬 (Li-rich), 노듈 (nodule), 단입자 (single particle), 코발트-프리 (cobalt free), 평균입경 (median diameter), 비표면적 (specific surface area)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0041715 A (LG CHEM, LTD.) 23 April 2019 (2019-04-23)<br>See abstract; paragraphs [0042], [0051], [0058], [0060], [0108], [0121], [0124], [0128] and [0167]-[0168]; and claims 1-2. | 1-19 |
| Y | KR 10-2016-0032246 A (MITSUI MINING & SMELTING CO., LTD.) 23 March 2016 (2016-03-23)<br>See abstract; and paragraphs [0012], [0115]-[0124] and [0161]-[0162]. | 1-19 |
| A | KR 10-2021-0046523 A (ECOPRO BM CO., LTD.) 28 April 2021 (2021-04-28)<br>See entire document. | 1-19 |
| A | CN 112174227 A (XIAMEN XIA TUNGSTEN NEW ENERGY MATERIAL CO., LTD.) 05 January 2021 (2021-01-05)<br>See entire document. | 1-19 |
| A | KR 10-2015-0004645 A (SAMSUNG SDI CO., LTD.) 13 January 2015 (2015-01-13)<br>See entire document. | 1-19 |

| ☐ Further documents are listed in the continuation of Box C. | ☑ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 July 2024** | **29 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/005282** |

| Patent document cited in search report | | | Publication date (day/month/year) | Patent family member(s) | | | Publication date (day/month/year) |
| --- | --- | --- | --- | --- | --- | --- | --- |
| KR | 10-2019-0041715 | A | 23 April 2019 | KR | 10-2325727 | B1 | 12 November 2021 |
| KR | 10-2016-0032246 | A | 23 March 2016 | CN | 105612124 | A | 25 May 2016 |
| | | | | CN | 105612124 | B | 23 March 2018 |
| | | | | GB | 2536149 | A | 07 September 2016 |
| | | | | GB | 2536149 | B | 25 January 2017 |
| | | | | JP | 5809772 | B2 | 11 November 2015 |
| | | | | KR | 10-1613862 | B1 | 20 April 2016 |
| | | | | US | 2016-0254539 | A1 | 01 September 2016 |
| | | | | US | 9525173 | B2 | 20 December 2016 |
| | | | | WO | 2015-053357 | A1 | 16 April 2015 |
| KR | 10-2021-0046523 | A | 28 April 2021 | CN | 112687866 | A | 20 April 2021 |
| | | | | CN | 114556627 | A | 27 May 2022 |
| | | | | CN | 114556627 | B | 15 March 2024 |
| | | | | CN | 114556628 | A | 27 May 2022 |
| | | | | CN | 114556635 | A | 27 May 2022 |
| | | | | CN | 118099391 | A | 28 May 2024 |
| | | | | EP | 3819262 | A1 | 12 May 2021 |
| | | | | EP | 4047689 | A1 | 24 August 2022 |
| | | | | EP | 4047689 | A4 | 27 December 2023 |
| | | | | EP | 4047691 | A1 | 24 August 2022 |
| | | | | EP | 4047691 | A4 | 20 December 2023 |
| | | | | EP | 4047692 | A2 | 24 August 2022 |
| | | | | EP | 4047692 | A4 | 20 December 2023 |
| | | | | JP | 2021-068701 | A | 30 April 2021 |
| | | | | JP | 2022-172169 | A | 15 November 2022 |
| | | | | JP | 2022-552562 | A | 16 December 2022 |
| | | | | JP | 2022-553262 | A | 22 December 2022 |
| | | | | JP | 2022-553263 | A | 22 December 2022 |
| | | | | JP | 2024-023430 | A | 21 February 2024 |
| | | | | JP | 2024-045104 | A | 02 April 2024 |
| | | | | JP | 7128245 | B2 | 30 August 2022 |
| | | | | JP | 7395724 | B2 | 11 December 2023 |
| | | | | JP | 7408794 | B2 | 05 January 2024 |
| | | | | KR | 10-2021-0046528 | A | 28 April 2021 |
| | | | | KR | 10-2021-0046572 | A | 28 April 2021 |
| | | | | KR | 10-2021-0046575 | A | 28 April 2021 |
| | | | | KR | 10-2022-0088401 | A | 27 June 2022 |
| | | | | KR | 10-2023-0053558 | A | 21 April 2023 |
| | | | | KR | 10-2023-0113704 | A | 01 August 2023 |
| | | | | KR | 10-2023-0142684 | A | 11 October 2023 |
| | | | | KR | 10-2412692 | B1 | 24 June 2022 |
| | | | | KR | 10-2481032 | B1 | 26 December 2022 |
| | | | | KR | 10-2519556 | B1 | 11 May 2023 |
| | | | | KR | 10-2558594 | B1 | 24 July 2023 |
| | | | | KR | 10-2585694 | B1 | 06 October 2023 |
| | | | | US | 2021-0119208 | A1 | 22 April 2021 |
| | | | | US | 2022-0388864 | A1 | 08 December 2022 |
| | | | | US | 2022-0393153 | A1 | 08 December 2022 |
| | | | | US | 2022-0411282 | A1 | 29 December 2022 |
| | | | | WO | 2021-075940 | A1 | 22 April 2021 |

Form PCT/ISA/210 (patent family annex) (July 2022)

INTERNATIONAL SEARCH REPORT
Information on patent family members

International application No.

**PCT/KR2024/005282**

| Patent document cited in search report | | | Publication date (day/month/year) | Patent family member(s) | | | Publication date (day/month/year) |
|---|---|---|---|---|---|---|---|
| | | | | WO | 2021-075941 | A2 | 22 April 2021 |
| | | | | WO | 2021-075941 | A3 | 10 June 2021 |
| | | | | WO | 2021-075942 | A1 | 22 April 2021 |
| CN | 112174227 | A | 05 January 2021 | CN | 112174227 | B | 24 May 2022 |
| KR | 10-2015-0004645 | A | 13 January 2015 | CN | 104282879 | A | 14 January 2015 |
| | | | | CN | 104282879 | B | 30 July 2019 |
| | | | | EP | 2822065 | A2 | 07 January 2015 |
| | | | | EP | 2822065 | A3 | 27 May 2015 |
| | | | | EP | 2822065 | B1 | 20 December 2017 |
| | | | | JP | 2015-015244 | A | 22 January 2015 |
| | | | | JP | 6462250 | B2 | 30 January 2019 |
| | | | | KR | 10-1794097 | B1 | 06 November 2017 |
| | | | | US | 10629902 | B2 | 21 April 2020 |
| | | | | US | 2015-0010823 | A1 | 08 January 2015 |

Form PCT/ISA/210 (patent family annex) (July 2022)

**EP 4 685 869 A1**

REFERENCES CITED IN THE DESCRIPTION

**Patent documents cited in the description**

- KR 1020230065296

- KR 1020240052072